# EUROPÄISCHE PATENTSCHRIFT

(11) **EP 3 575 816 B1**
(45) Veröffentlichungstag und Bekanntmachung des Hinweises auf die Patenterteilung: **30.06.2021**
(21) Anmeldenummer: 18175199.1
(22) Anmeldetag: 30.05.2018
(51) Int. Cl.: G01S 7/288, G01S 7/292, G01F 23/284, G01S 13/88, G01S 13/34

(54) **VERFAHREN ZUR MESSUNG DER FLIESSGESCHWINDIGKEIT EINES MEDIUMS**
DEVICE FOR MEASURING THE FLOW VELOCITY OF A MEDIUM
PROCÉDÉ DE MESURE DE LA VITESSE DE DÉBIT D'UN MILIEU

(43) Veröffentlichungstag der Anmeldung: 04.12.2019
(73) Patentinhaber: VEGA Grieshaber KG, 77709 Wolfach (DE)
(72) Erfinder: Corbe, Bernhard, 77746 Schutterwald (DE); Welle, Roland, 77756 Hausach (DE); Wälde, Steffen, 78078 Niedereschach (DE)
(74) Vertreter: Patentanwälte Bauer Vorberg Kayser

(56) Entgegenhaltungen:
- EP-A1- 2 824 427
- DE-A1-102013 200 951
- DE-A1-102016 100 217
- US-A1- 2017 131 385

## Beschreibung

Die vorliegende Erfindung betrifft ein Verfahren zur Messung der Fließgeschwindigkeit eines Mediums in einem offenen Gerinne mit einem Radarmessgerät.

Im Bereich der Überwachung von Flüssen und Gerinnen ist neben deren Pegel ebenfalls die Fließgeschwindigkeit eine wichtige Messgröße. Aus diesen Messgrößen und der bekannten Geometrie des Gerinnes kann ein Volumenstrom berechnet werden, der in dem Gerinne fließt. Beispielsweise in Kläranlagen oder im Hochwasserschutz ist dieser Wert von großer Bedeutung.

Bei komplexen Gerinnegeometrien und Flussbetten müssen zur Volumenstromberechnung Simulationen angestellt werden, was nach dem heutigen Stand der Technik aber keine größere Herausforderung mehr darstellt. Hierfür reicht es aus, wenn die Fließgeschwindigkeit wenigstens an einem Punkt im Querschnitt des Gerinnes bekannt ist. Mittels radarbasierten Fließgeschwindigkeitssensoren ist es möglich, die Oberflächengeschwindigkeit an einem Punkt des Gerinnes zu messen und mit diesem Wert den besagten Volumenstrom zu errechnen.

Die bekannten Radarsensoren nutzen ein Verfahren zur Messung der Fließgeschwindigkeit eines Mediums in offenen Gerinnen unter Ausnutzung des sog. Dopplereffekts, durch den bei reflektierten Radarsignalen eine Frequenzverschiebung, die proportional zur Geschwindigkeit des Reflektors ist, auftritt. Durch eine Bestimmung der Frequenzverschiebung kann die Fließgeschwindigkeit des Mediums damit ermittelt werden.

Als Reflektoren wirken beispielsweise Unebenheiten einer Oberfläche des Mediums oder bei Fluiden Feststoffe an der Oberfläche des Fluids.

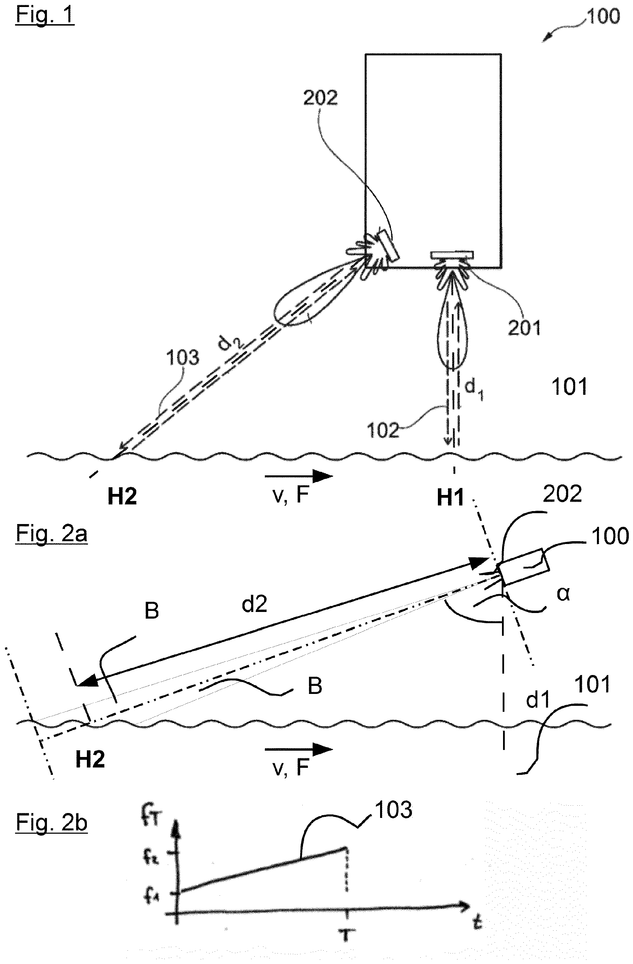

Figur 1 zeigt eine vereinfachte Darstellung eines Radarmessgeräts 100 zur Bestimmung einer Fließgeschwindigkeit v und eines Pegels eines Mediums 101 in einem offenen Gerinne 104 gemäß dem Stand der Technik.

Die Messung der Fließgeschwindigkeit v des Mediums 101, bei dem es sich in dem vorliegenden Ausführungsbeispiel um ein Fluid, bspw. Wasser, handelt, und einer ersten Distanz d1 zwischen einer Oberfläche des Mediums 101 und dem Radarmessgerät 100 sind in einem einzigen Feldgerät, beispielsweise einem FMCW-Radarsystem (FMCW = Frequency Modulated Continous Wave), kombiniert. Das Radarmessgerät 100 kann dazu, wie im vorliegenden Ausführungsbeispiel, zwei Radarsensoren, einen ersten Radarsensor 201, mit einer erste Hauptabstrahlrichtung H1, die senkrecht zu einer Oberfläche des Mediums 101 ausgerichtet ist, zur Bestimmung der ersten Distanz d1 und einen zweiten Radarsensor 202, mit einer zweiten Hauptabstrahlrichtung H2, die schräg zu einer Fließrichtung F des Mediums 101 ausgerichtet ist, zur Bestimmung der Fließgeschwindigkeit v, aufweisen.

Alternativ kann das Radarmessgerät 100 nur den zweiten Radarsensor 202 aufweisen, mit Hilfe dessen dann sowohl die erste Distanz d1 des Radarmessgeräts 100 zur Oberfläche des Mediums 101 als auch die Fließgeschwindigkeit v bestimmt wird. Die erste Distanz d1, die den Abstand des Radarmessgeräts 100 zur Oberfläche des Mediums 101 repräsentiert wird in diesem zweiten Fall über die Bestimmung einer zweiten Distanz d2 zwischen der Oberfläche des Mediums 101 und dem zweiten Radarsensor 202 in Hauptabstrahlrichtung H2 des zweiten Radarsensors 201 sowie einem ersten Winkel α errechnet, den die zweite Hauptabstrahlrichtung H2 mit einer Flächennormalen auf die Oberfläche des Mediums 101 einschließt.

Zur Vereinfachung kann als erster Winkel α auch ein Winkel angenommen werden, dem die zweite Hauptabstrahlrichtung H2 mit einer Senkrechten einschließt.

Das Radarmessgerät 100 gemäß Figur 1 ist so ausgestaltet, dass ein erstes Sendesignal 102 des ersten Radarsensors 201 in der ersten Hauptabstrahlrichtung H1 ausgesendet wird, die senkrecht zur Oberfläche des Mediums 101 ausgerichtet ist. Über eine Laufzeit des ersten Sendesignals 102 oder eine Frequenzverschiebung eines Empfangssignals relativ zu dem ersten Sendesignal 102 kann die erste Distanz d1 des Radarmessgeräts 100 zu der Oberfläche des Mediums 101 bestimmt werden.

Der zweite Radarsensor 202 ist so angeordnet und ausgebildet, dass die zweite Hauptabstrahlrichtung H2, in der ein zweites Sendesignal 103 des zweiten Radarsensors 202 ausgesendet wird, mit den Oberflächennormalen in Fließrichtung F den ersten Winkel α einschließt, der theoretisch lediglich weniger als 90° betragen muss und in der Praxis zwischen 30° und 60° liegt. In einer Draufsicht kann die zweite Hauptabstrahlrichtung H2 mit der Fließrichtung F des Mediums 101 einen zweiten Winkel β einschließen der zwischen 0° und 60° beträgt. Diese Ausrichtung wird nachfolgend auch als schräg bezeichnet.

Schräg im Sinne der vorliegenden Anmeldung meint also, dass die zweite Hauptabstrahlrichtung H2 und die Fließrichtung F des Mediums 101 in einer Seitenansicht, weder senkrecht aufeinander stehen, noch parallel zueinander ausgerichtet sind, d. h. die zweite Hauptabstrahlrichtung H2 vorliegend zwischen 30° und 60° von einer Oberflächennormalen auf die Oberfläche des Mediums und zwischen 0° und 60° von der Fließrichtung des Mediums abweicht.

Das zweite Sendesignal 103 wird dann zumindest teilweise an der Oberfläche des Mediums 101 reflektiert. Da die Oberfläche des Mediums 101 eine leichte Kräuselung oder Wellenbildung aufweisen kann, kann aus dem schräg abgestrahlten, an der Oberfläche des Mediums 101 reflektierten und von dem zweiten Radarsensor 202 aufgenommenen Sendesignal unter Berücksichtigung des Dopplereffekts die Fließgeschwindigkeit v des Mediums 101 bestimmt werden. Das senkrecht zur Oberfläche des Mediums 101 ausgestrahlte erste Sendesignal 102 kann nach dessen Reflexion an der Oberfläche des Mediums 101 und Aufnahme durch den ersten Radarsensor 201 zur Entfernungsmessung herangezogen werden.

Zur Messung der Fließgeschwindigkeit v des Mediums 101 können verschiedene Radarverfahren zum Einsatz kommen. Ein gängiges Radarverfahren ist das CW-Radarverfahren (Continuous Wave). Dabei wird ein unmoduliertes Sinussignal durch den schräg zur Oberfläche des Mediums 101 stehenden zweiten Radarsensor 202 gesendet und empfangen. Durch Wellenbewegungen und bewegte Partikel auf oder nahe der Oberfläche, wird das reflektierte Signal mit einem Doppler beaufschlagt, d. h. es entsteht eine Frequenzverschiebung proportional zur Geschwindigkeit der Reflexionsstelle, die von dem Radarmessgerät 100 ausgewertet wird. Mit einem CW-Radar können Dopplerfrequenzen sehr genau gemessen und aufgelöst werden.

Das hierbei entstehende Dopplerspektrum beinhaltet Geschwindigkeitskomponenten aller sich in einem Sichtbereich B des zweiten Radarsensors 202 befindlichen, bewegten Objekte, was insbesondere bei widrigen Messbedingungen, bspw. Regen oder Laub im Sichtbereich B des Radarsensors 202 zu Problemen führt. Eine absolute Distanzmessung ist mit dem CW-Radarverfahren nicht möglich.

Als Alternative ist das FMCW-Radarverfahren im Stand der Technik bekannt. Bei diesem Verfahren wird ein hochfrequentes Sinussignal in seiner Frequenz f kontinuierlich moduliert, was im Frequenz-Zeit-Diagramm einer Rampe oder einem Sägezahnsignal entspricht. Dieses Verfahren hat den Vorteil, neben der Position eines Reflektors, d. h. dem Abstand des Objekts zu dem Radarsensor, ebenfalls die durch das Objekt erzeugte Dopplerverschiebung und somit dessen Geschwindigkeit zu messen. Wenn sich im Sichtbereich B des zweiten Radarsensors 202 mehrere bewegte Objekte befinden, überlagern sich die die Dopplereffekte der bewegten Objekte, sodass es zu Uneindeutigkeiten in der Signalauswertung kommt.

Figur 2a zeigt eine vereinfachte Darstellung des Radarmessgeräts 100 aus Figur 1, wobei zur besseren Übersichtlichkeit nur der zweite Radarsensor 202 dargestellt ist. Das Radarmessgerät 100 sendet in Richtung der zweiten Hauptabstrahlrichtung H2 das zweite Sendesignal 103 aus. Zur Verdeutlichung ist ein Abstrahlkegel des Radarmessgeräts 100 eingezeichnet, der die kegelförmige Erweiterung des zweiten Sendesignals 103 mit zunehmendem Abstand von dem zweiten Radarsensor 202 zeigt.

Alle radarbasierten Verfahren zur Messung von Dopplerfrequenzen, können nur Geschwindigkeitskomponenten parallel zur Ausbreitungsrichtung der elektromagnetischen Wellen, d. h. vorliegend im Wesentlichen parallel zur zweiten Hauptabstrahlrichtung H2, des Radarmessgeräts 100 erfassen. Regen besitzt deshalb ein relativ breites Dopplerspektrum. Aufgrund des Winkels zwischen der Hauptabstrahlrichtung H2 des Radarmessgeräts 100 in Bezug auf eine Fallrichtung des Regens, können, selbst bei einer konstanten Fallgeschwindigkeit der Tropfen, viele verschiedene Geschwindigkeiten entstehen. Die so entstandenen Geschwindigkeiten können in derselben Größenordnung wie die Fließgeschwindigkeit des Mediums 101 in dem Gerinne 104 liegen und sich mit dieser unvorteilhaft überlagern. Ebenfalls erzeugen Regentropfen negative und positive Geschwindigkeitsanteile, da sie während sie an dem Radarmessgerät 100 vorbei fallen, sich zunächst auf dieses zu und dann wieder von diesem weg bewegen. Dieser Effekt wird durch die Nebenkeulen einer realen Antenne eines Radarmessgeräts 100 noch verstärkt.

Wird das Radarmessgerät 100 mit einem Messverfahren gemäß dem Stand der Technik verwendet, so sind in einer bereits idealisierten Darstellung sämtliche Objekte in dem eingezeichneten Sichtbereich B, der durch die beiden parallelen Linien und den Abstrahlkegel des Radarsensors 202 begrenzt wird, Objekte, die von dem zweiten Radarsensor 202 bei einer Messung berücksichtigt werden. Fällt also bspw. Regen und wird durch Wind in Richtung der Fließrichtung F des Mediums 101 beschleunigt, und/oder fliegt loses Laub umher, so werden sämtliche Geschwindigkeitsanteile parallel zur Hauptabstrahlrichtung H2 im Dopplerspektrum berücksichtigt und überlagert. Eine Messung der Fließgeschwindigkeit v kann dadurch verhindert werden.

In Figur 2b ist das Sendesignal 103 eines FMCW-Verfahrens dargestellt, gezeigt ist die Frequenz F über die Zeit t Das Sendesignal 103 wir während einer Messperiode T von einer Startfrequenz f1 zu einer Stoppfrequenz f2 linear verändert.

In den Figuren 3a und 3b ist eine gemäß dem Verfahren aus dem Stand der Technik erhältliche Messkurve d. h. das Dopplerspektrum bei guten Messbedingungen (Figur 3a) und bei Regen (Figur 3b) gezeigt.

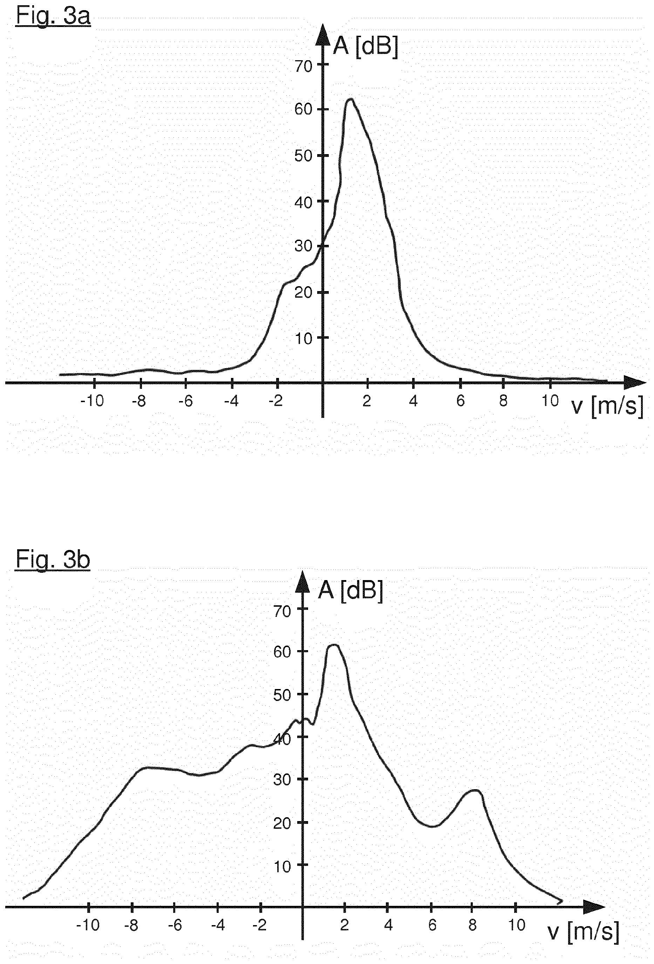

Zur Berechnung der mittleren Fließgeschwindigkeit v wird jeweils der Schwerpunkt unter der Messkurve aus Figur 3a und Figur 3b bestimmt. Dieser hängt maßgeblich davon ab, wie stark das Spektrum von Störern beeinflusst wird. Unter Umständen kann der Schwerpunkt sogar im negativen Halbraum des Spektrums liegen, was einer Richtungsänderung der Fließgeschwindigkeit v bedeuten würde.

An den aus dem Stand der Technik bekannten Verfahren wird es daher als nachteilig empfunden, dass Störeinflüsse wie bspw. Regen oder durch Wind verwehtes Laub die Messung stark verfälschen können und alle bewegten Objekte im Sichtbereich B des Radarsensors Dopplerfrequenzen erzeugen, die zusätzlich zur Fließgeschwindigkeit v erfasst werden.

Weiterer Stand der Technik ist aus EP 2 824 427 A1, DE 10 2016 100 217 A1 und DE 10 2013 200 951 A1 bekannt.

Es ist die Aufgabe der vorliegenden Erfindung ein Verfahren zur Messung der Fließgeschwindigkeit eines Mediums in einem offenen Gerinne derart weiterzubilden, dass die aus dem Stand der Technik bekannten negativen Effekte verringert oder gänzlich vermieden werden.

Diese Aufgabe wird durch ein Verfahren mit den Merkmalen des Patentanspruchs 1 gelöst. Vorteilhafte Weiterbildungen sind Gegenstand von abhängigen Patentansprüchen.

Ein erfindungsgemäßes Verfahren zur Messung der Fließgeschwindigkeit eines Mediums in einem offenen Gerinne mit einem Radarmessgerät, wobei das Radarmessgerät so angeordnet und ausgerichtet ist, dass eine Hauptabstrahlrichtung des Radarmessgeräts mit einer Richtung einer Oberflächennormalen des Mediums einen ersten Winkel zwischen 20° und 80°, vorzugsweise zwischen 30° und 60° und mit einer Fließrichtung des Mediums einen zweiten Winkel zwischen 0° und 80°, vorzugsweise zwischen 0° und 60° einschließt, umfassend folgende Schritte:
- Aussenden eines Sendesignals mit einer Mehrzahl von Frequenzrampen,
- Empfangen eines Empfangssignals pro Frequenzrampe des Sendesignals,
- Abspeichern der Empfangssignale,
- Durchführen einer ersten Spektralanalyse der Empfangssignale,
- Durchführen einer zweiten Spektralanalyse mehrerer Ausgangssignale der ersten Spektralanalyse in wenigstens einem vorgegebenen Abstand zu dem Radarmessgerät,
- Bestimmen einer Fließgeschwindigkeit auf Basis der Phasenänderung anhand der Ausgangssignale der zweiten Spektralanalyse.

Das Sendesignal weist dazu pro Messung eine Mehrzahl von Frequenzrampen auf. Bei solchen Frequenzrampen, die auch als Chirps bezeichnet werden, durchläuft das Sendesignal bspw. in einer Rampendauer von wenigen Mikrosekunden bis zu einigen hundert Mikrosekunden, bspw. 100 µs oder 200 µs, einen Frequenzbereich von einigen GHz, bspw. 5 GHz oder 10 GHz, vorzugsweise in einem Frequenzbereich zwischen 75 GHz und 85 GHz. Die Frequenzrampen können dabei kontinuierlich durchgesweept werden, d. h. dass eine kontinuierliche Veränderung der Frequenz erfolgt, oder in einer feinen Rasterung, bspw. in 5 Hz-Schritten, diskrete Frequenzwerte innerhalb des Frequenzbereichs beinhalten.

Die Empfangssignale werden Empfangen und bspw. in einem Zwischenspeicher abgespeichert, wobei pro Frequenzrampe ein Empfangssignal erhalten wird.

Die Empfangssignale werden mit einer ersten Spektralanalyse vom Zeit- in den Frequenzbereich überführt, wobei eine Frequenzverschiebung des Empfangssignals relativ zum Sendesignal proportional zu einem Abstand einer Reflexion zum Sender, d. h. zu dem Füllstandmessgerät, ist, sodass grundsätzlich Reflexionen und deren Abstände zum Füllstandmessgerät, vorliegend also bspw. die Entfernung der Oberfläche des Mediums in dem Gerinne zu dem Füllstandmessgerät, aus dem erhaltenen Signal ermittelt werden können. Unter Einbeziehung des ersten Winkels und des zweiten Winkels ist damit grundsätzlich auch ein Pegel des Mediums in dem Gerinne bestimmbar.

Durch die zweite Spektralanalyse, die wenigstens am Ort, d. h. der Frequenz der Reflexion über die Ausgangssignale der ersten Spektralanalyse hinweg durchgeführt wird, wird eine von einer Geschwindigkeit der Reflexion, d. h. einer Geschwindigkeit, mit der sich der Punkt des Mediums, an dem die Reflexion verursacht wurde, bewegt, abhängige Phase des Signals ermittelt. Aus der Änderung der Phase über die einzelnen Empfangssignale hinweg kann eine Geschwindigkeitsverteilung am Ort der Reflexion und damit vorliegend im Bereich der Oberfläche des in dem Gerinne befindlichen Mediums ermittelt werden.

Die zweite Spektralanalyse kann dazu auf einen Abstand beschränkt werden, in dem die Oberfläche des Mediums in den Gerinne liegt, d. h. es werden für die Bestimmung der Fließgeschwindigkeit nur Signalanteile verwendet, die tatsächlich eine Geschwindigkeit des Mediums repräsentieren.

Der erste Winkel α wird in der vorliegenden Anmeldung in einer Seitenansicht, senkrecht auf die durch die Oberflächennormale und die zweite Hauptabstrahlrichtung definierte Ebene, der zweite Winkel in einer Draufsicht von oben, d. h. mit Blick in Richtung der Oberflächennormalen gemessen.

Es sei an dieser Stelle angemerkt, dass die erste und die zweite Spektralanalyse auch in umgekehrter Reihenfolge durchgeführt werden können.

Um die Messung unabhängig von ggf. auftretenden einzelnen, lokal überhöhten Messwerten zu machen, wird erfindungsgemäß die Fließgeschwindigkeit aufgrund einer durchschnittlichen Phasenänderung in einem Abstandsbereich ermittelt werden. Dazu wird die zweite Spektralanalyse in dem gesamten Abstandsbereich ausgewertet, wodurch eine durchschnittliche Phasenänderung und korrespondierend eine durchschnittliche Geschwindigkeit in dem Abstandsbereich ermittelbar ist.

Es sei an dieser Stelle angemerkt, dass der Abstandsbereich aufgrund der schrägen Einstrahlung der Messsignale relativ zur Oberfläche des Mediums, d. h. dem ersten und dem zweiten Winkel, abhängig ist. Bei der Bestimmung der Fließgeschwindigkeit muss daher der ersten Winkel und zusätzlich der zweiten Winkel, der die Ausrichtung des Radarmessgerätes relativ zur Fließrichtung beschreibt, berücksichtigt werden. Der Abstandsbereich, d. h. ein Bereich mit Abständen von einem minimalen Abstand bis zu einem maximalen Abstand wird bei einer in Hauptabstrahlrichtung kegelförmigen Abstrahlcharakteristik auf einer ebenen Fläche eine Ellipse darstellen. Ist die Oberfläche des Mediums in dem Gerinne nicht eben, so wird diese Form entsprechend angepasst aussehen.

Die Ermittlung der Fließgeschwindigkeit kann bspw. in einem in Hauptabstrahlrichtung vorgegebenen Abstand oder Abstandsbereich zum Radarmessgerät erfolgen, in dem die Oberfläche des Mediums erwartet wird. Soll die Ermittlung der Fließgeschwindigkeit allerdings mit einer höheren Genauigkeit erfolgen, oder wenn stark schwankende Pegel zu erwarten sind, so kann zur Bestimmung des Abstandes bzw. Abstandsbereiches, in dem die Oberfläche des Mediums ist, also des Abstandes in dem die Fließgeschwindigkeit ermittelt werden soll, zuvor eine Pegelmessung erfolgen. Auf Basis der Pegelmessung wird erfindungsgemäß der Abstand bzw. Abstandsbereich angepasst.

Die Pegelmessung kann grundsätzlich mit demselben Radarmessgerät erfolgen, mit dem auch die Bestimmung der Fließgeschwindigkeit erfolgt. Aufgrund der schrägen Ausrichtung dieses Radarmessgeräts relativ zur Oberfläche des Mediums kann, insbesondere bei ungünstigen Messbedingungen, die bspw. durch Umwelteinflüsse verursacht werden können, ein Messfehler der Pegelmessung, sehr groß werden, sodass eine Pegelmessung mit einer unabhängigen Messung, insbesondere einem zweiten Radarsensor, der senkrecht zur Oberfläche des Mediums ausgerichtet ist, zu bevorzugen ist. Der Pegelmesswert kann dann für die Bestimmung des Abstandes bzw. Abstandsbereichs genutzt werden.

Unter dem Begriff Pegelmessung wird in der vorliegenden Anmeldung sowohl eine Bestimmung des Abstands des Messgeräts von der Oberfläche des Mediums als auch eine Messung der Entfernung der Oberfläche des Mediums von einem Grund des Gerinnes verstanden. In der vorliegenden Messanordnung sind diese Werte jeweils ineinander umrechenbar, sodass aus dem Pegel der Abstand des Messgerätes von der Oberfläche des Mediums, und aus dem Abstand des Messgeräts von der Oberfläche des Mediums der Pegel ermittelbar ist.

Auf diese Weise kann der Abstandsbereich auf Basis des ermittelten Pegels angepasst werden.

Als Verfahren für die erste und/oder die zweite Spektralanalyse kann bspw. eine schnelle Fouriertransformation (FFT) eingesetzt werden. Die schnelle Fouriertransformation ist ein in der Signalverarbeitung weit verbreitetes und effektives Verfahren zur Überführung von Signalen zwischen dem Zeit- und dem Frequenzbereich.

Das Sendesignal weist vorzugsweise wenigstens 25, weiter bevorzugt wenigstens 50 und idealerweise einigen Hundert Frequenzrampen auf, die ausgesendet werden.

Die Anzahl der Frequenzrampen, die in einem Sendesignal enthalten sind, gibt die Anzahl der möglichen Empfangssignale vor. Diese Anzahl bestimmt eine maximal mögliche zeitliche Auflösung für das Ausgangssignal der zweiten Spektralanalyse, sodass dadurch auch die Anzahl der Signalpunkte für die Bestimmung der Phasenänderung und damit der Fließgeschwindigkeit einhergeht.

In der praktischen Umsetzung des Verfahrens weist das Sendesignal eine Anzahl von 2ⁿ Frequenzrampen auf, wobei das Sendesignal typischerweise 128, 256 oder 512 Frequenzrampen enthält. Eine entsprechende Anzahl an Frequenzrampen bietet für Anwendungen zur Messung einer Fließgeschwindigkeit von Medien in Gerinnen eine hinreichend feine Auflösung, sodass sämtliche relevanten Geschwindigkeiten erfasst werden können.

Eine Frequenzrampe kann eine Dauer zwischen einer 1 µs und 1000 µs aufweisen. Typischerweise wird die Dauer der Frequenzrampen zwischen 50 µs und 300 µs liegen und insbesondere 100 µs oder 200 µs betragen.

Je steiler die Frequenzrampen verlaufen, d. h. je kürzer die Dauer der Frequenzrampen relativ zu einem Frequenzhub, d. h. dem Abstand einer unteren Grenzfrequenz zu einer oberen Grenzfrequenz der Frequenzrampe ist, umso größer wird die Frequenzverschiebung des Empfangssignals relativ zum Sendesignal. Tendenziell werden daher steilere Frequenzrampen bevorzugt, da kommerziell erhältliche Auswerteschaltungen, die immer kleinere geometrische Dimensionen aufweisen, eher zur Verarbeitung hoher Frequenzen ausgelegt sind.

Um Messfehler auszuschließen kann eine Startfrequenz und/oder eine Steigung und/oder eine Schrittweite und/oder eine Endfrequenz der Frequenzrampen variiert werden.

Durch eine Variation der Parameter des Verfahrens, bspw. der Anzahl an Frequenzrampen, der Startfrequenz, der Zielfrequenz, der Sweepzeit oder der Pausenzeit zwischen den Frequenzrampen im einem Sendesignal können Störeinflüsse, bspw. durch andere Sender minimiert, und eine Auswertung dynamisch verändert und optimiert werden. Beispielsweise können entsprechende Veränderungen abhängig von den bislang beobachteten Geschwindigkeiten der Reflexionen erfolgen, sodass bspw. durch eine Anpassung der Anzahl der Frequenzrampen die Auflösung hinsichtlich der Geschwindigkeitsauswertung erhöht oder erniedrigt werden kann.

Der erste Winkel kann beispielsweise mittels eines Lagesensors bestimmt werden.

Die vorliegende Erfindung wird nachfolgend anhand von Ausführungsbeispielen unter Bezugnahme auf die beigefügten Figuren eingehend erläutert. Es zeigen:
- Figur 1: eine vereinfachte Darstellung eines Radarmessgeräts zur Bestimmung einer Fließgeschwindigkeit und eines Pegels eines Mediums in einem offenen Gerinne,
- Figur 2a: eine vereinfachte Darstellung des zweiten Radarsensors aus Figur 1 bei Anwendung eines Messverfahrens gemäß dem Stand der Technik,
- Figur 2b: ein FMCW moduliertes Sendesignal,
- Figur 3a: eine Messkurve, wie sie mit dem Messverfahren gemäß dem Stand der Technik erhalten wird,
- Figur 3b: die Messkurve gemäß Figur 3a bei Regen,

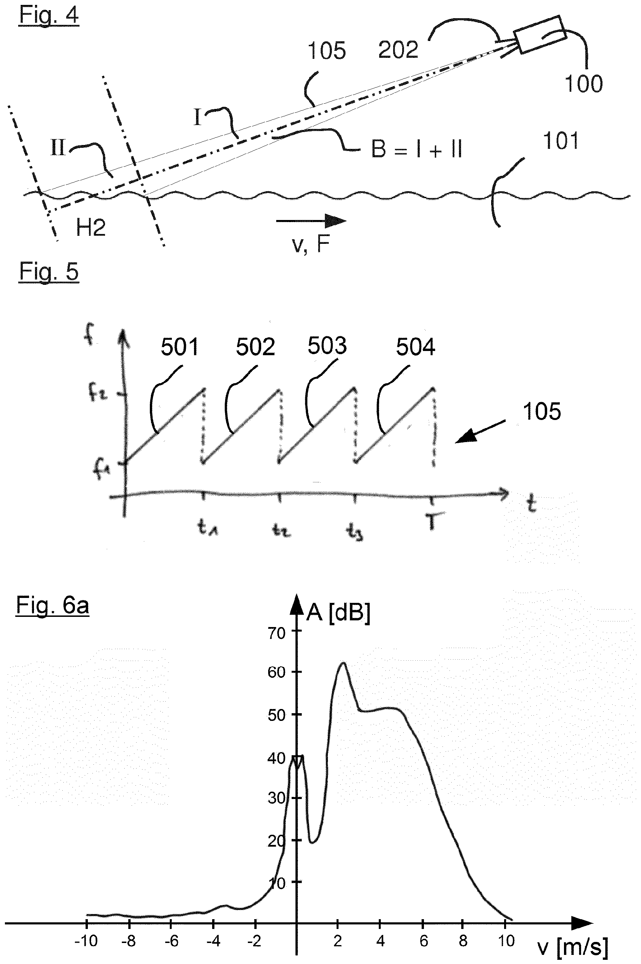

- Figur 4: eine vereinfachte Darstellung des zweiten Radarsensors aus Figur 1 bei Anwendung des Messverfahrens gemäß der vorliegenden Anmeldung,
- Figur 5: das Sendesignal eines Verfahrens zur Messung der Fließgeschwindigkeit gemäß der vorliegenden Anmeldung,
- Figur 6a: eine Messkurve, wie sie mit dem Messverfahren gemäß der vorliegenden Anmeldung erhalten wird und

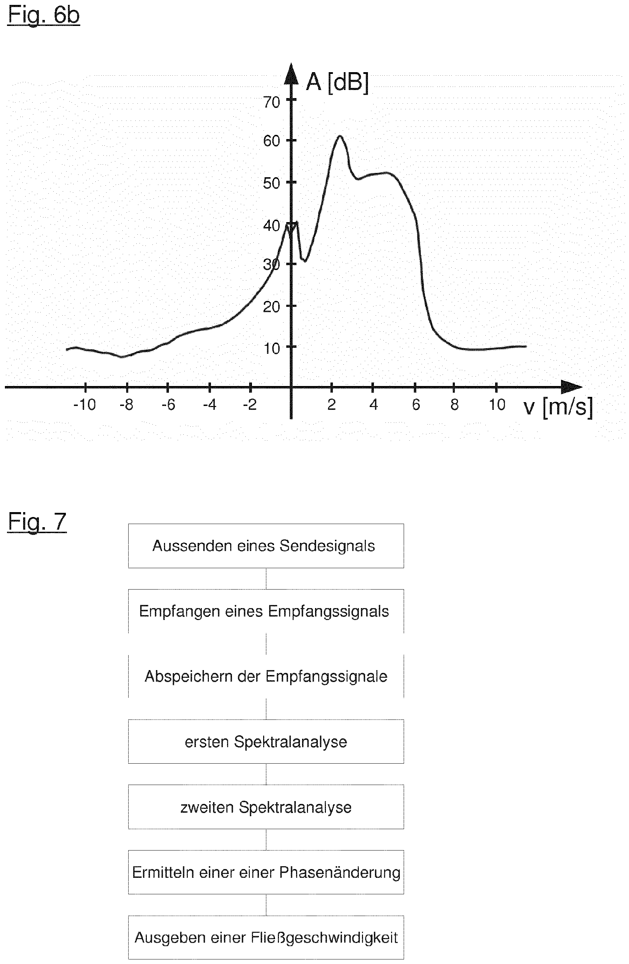

- Figur 6b: die Messkurve gemäß Figur 5a bei Regen.

In den Figuren bezeichnen - soweit nicht anders angegeben - gleiche Bezugszeichen gleiche Komponenten mit gleicher Funktion.

Figur 4 zeigt die Darstellung des Radarmesgeräts 100 aus Figur 2, wobei das Messverfahren gemäß der vorliegenden Anmeldung zur Anwendung kommt. Grundsätzlich ist das Radarmessgerät 100 aufgebaut wie im Zusammenhang mit dem Stand der Technik und den Figuren 1 und 2 beschrieben.

Durch das vorliegende Verfahren kann ein Sichtbereich B des Radarmessgeräts 100 in einen ersten Bereich I, der für eine Messung nicht berücksichtig wird und einen zweiten Bereich II, der für die Bestimmung einer Fließgeschwindigkeit v eines Mediums 101 verwendet wird, unterteilt werden.

Durch die Beschränkung des für die Messung der Fließgeschwindigkeit v relevanten Bereichs auf den zweiten Bereich II kann auch für den Fall einer Vielzahl von Störungen eine deutlich verbessertes Messergebnis erreicht werden.

Das Verfahren der vorliegenden Anmeldung umfasst folgende Schritte:
- Aussenden eines Sendesignals 105 mit einer Mehrzahl von Frequenzrampen,
- Empfangen eines Empfangssignals pro Frequenzrampe des Sendesignals 105,
- Abspeichern der Empfangssignale,
- Durchführen einer ersten Spektralanalyse der Empfangssignale,
- Durchführen einer zweiten Spektralanalyse mehrerer Ausgangssignale der ersten Spektralanalyse in einem vorgegebenen Abstandsbereich zu dem Radarmessgerät 100,
- Ermitteln einer wenigstens einer Phasenänderung zwischen den Empfangssignalen in wenigstens einem Abstand d2 in dem Abstandsbereich,
- Bestimmen einer Fließgeschwindigkeit v auf Basis der Phasenänderung.

Figur 5 zeigt das Sendesignal 105 eines Verfahrens zur Füllstandmessung gemäß der vorliegenden Anmeldung.

Das Sendesignal 105 wird in diesem Ausführungsbeispiel während eines Messzyklus T in einem Zeitraum zwischen t = 0 und t = T in mehrere Frequenzrampen 501, 502, 503, 504 unterteilt, innerhalb welcher eine Frequenz f des abgestrahlten Radarsignals jeweils linear von einer Startfrequenz f1 hin zu einer Zielfrequenz f2 moduliert wird. Diese einzelnen Frequenzrampen werden auch als Chirps bezeichnet. Im Unterschied zu den bisher verwendeten Modulationsformen aus dem Stand der Technik wird während eines Messzyklus T zwischen t = 0 und t = T eine vorab definiert Anzahl an einzelnen Frequenzrampen 501-504 mit definiertem Zeitverhalten und definiertem Frequenzverhalten in Richtung des Mediums 101 abgestrahlt und wieder empfangen.

Als definiertes Zeitverhalten wird vorliegend ein vorbekanntes und exakt umgesetztes Timing der Start- und Stoppzeiten für jede Frequenzrampe 501-504 und der Pausen zwischen den Frequenzrampen 501-504 verstanden. Ein definiertes Frequenzverhalten meint die exakte Einhaltung von Startfrequenz f1 und Stoppfrequenz f2 sowie der Steigung der jeweiligen Frequenzrampen.

In Figur 5 sind der besseren Übersichtlichkeit halber lediglich vier Frequenzrampen 501-504 dargestellt. In einer tatsächlichen Umsetzung des vorliegenden Verfahrens werden wenigstens mehrere Zehn, bevorzugt mehrere Hundert, solcher Frequenzrampen 501-504 ausgesendet. Die Anzahl der Frequenzrampen 501-504 ist häufig eine Zweierpotenz, insbesondere 128, 256, 512 oder 1024. Abhängig von der jeweiligen Anwendung können auch höhere oder niedrigere Potenzen verwendet werden.

Die Figuren 6a und 6b zeigen Messkurven, wie sie mit dem Messverfahren gemäß der vorliegenden Anmeldung erhalten werden, bei guten Messbedingungen (Figur 6a) und bei Regen (Figur 6b). Dargestellt ist die Amplitude A in Dezibel der erhaltenen Signale über der Fließgeschwindigkeit v in Metern pro Sekunde.

Aus einem Vergleich der Figuren 6a und 6b ist ersichtlich, dass das Messergebnis durch die Störungen deutlich weniger verfälscht wird, sodass die Bestimmung der Fließgeschwindigkeit v dadurch deutlich zuverlässiger wird.

In Figur 7 ist ein Ablauf des Verfahrens der vorliegenden Anmeldung in einem Ablaufdiagramm dargestellt.

In einem ersten Schritt wird ein Sendesignals 105 mit einer Mehrzahl von Frequenzrampen 501-504 ausgesendet. Das Sendesignal 105 wird an der Oberfläche des Mediums 101 in dem offenen Gerinne 104 reflektiert und pro Frequenzrampe 501-504 in dem Sendesignal 105 ein Empfangssignal zu dem Radarmessgerät 100 zurückgeworfen.

Die Empfangssignale werden von dem Radarmessgerät 100 empfangen und abgespeichert.

Die Empfangssignale werden anschließend einer ersten Spektralanalyse, vorliegend einer schnellen Fouriertransformation unterzogen. Aus den daraus erhaltenen Signalen kann ein Abstand eines Reflektors, an dem das Sendesignal reflektiert wurde, zu dem Radarmessgerät 100 ermittelt werden. Dieser Abstand ist in der vorliegenden Anmeldung die zweite Distanz d2. Aus der zweiten Distanz d2 kann in Kenntnis der Ausrichtung des Radarmessgeräts zur Oberfläche des Mediums ein senkrechter Abstand des Radarmessgeräts zur Oberfläche des Mediums, d. h. die erste Distanz d1 ermittelt werden. Die erste Distanz d1 kann in einen Pegel des Mediums 101 in dem Gerinne 104 umgerechnet werden.

Anschließend wird eine zweiten Spektralanalyse mehrerer Ausgangssignale der ersten Spektralanalyse in einem vorgegebenen Abstandsbereich zu dem Radarmessgerät durchgeführt. Der Abstandsbereich kann vorgegeben oder durch eine Pegelmessung ermittelt worden sein. Idealerweise ist der Abstandsbereich so gewählt, dass lediglich ein Bereich der Oberfläche des Mediums erfasst wird.

Aus den Ergebnissen der zweiten Spektralanalyse wird eine Veränderung der Phase zwischen den Empfangssignalen in wenigstens einem Abstand in dem Abstandsbereich ermittelt. Diese Veränderung der Phase ist proportional zu einer Geschwindigkeit der Reflektoren in dem Abstand, sodass die Fließgeschwindigkeit v auf Basis der Veränderung der Phase bestimmt werden kann.

Abschließend wird die Fließgeschwindigkeit v ausgegeben und/oder weiterverarbeitet.

### Bezugszeichenliste

- 100: Radarmessgerät
- 101: Medium
- 102: erstes Sendesignal
- 103: Zweites Sendesignal
- 104: Gerinne
- 105: Sendesignal
- 201: erster Radarsensor
- 202: zweiter Radarsensor

- 501-504: Frequenzrampe

- α: erster Winkel
- β: zweiter Winkel
- I: erster Bereich
- II: zweiter Bereich, Abstandsbereich
- A: Amplitude
- B: Sichtbereich
- d1: erste Distanz
- d2: zweite Distanz
- F: Fließrichtung
- f: Frequenz
- f1: Startfrequenz
- f2: Stoppfrequenz
- H1: erste Hauptabstrahlrichtung
- H2: zweite Hauptabstrahlrichtung
- t: Zeit
- T: Messperiode, Periodendauer

## Patentansprüche

1. Verfahren zur Messung der Fließgeschwindigkeit (v) eines Mediums (101) in einem offenen Gerinne (104) mit einem Radarmessgerät (100),
wobei das Radarmessgerät (100) so angeordnet und ausgerichtet ist, dass eine Hauptabstrahlrichtung (H1) des Radarmessgeräts (100) mit einer Richtung einer Oberflächennormalen des Mediums (101) einen ersten Winkel (α) zwischen 20° und 80°, vorzugsweise zwischen 30° und
60°, und mit einer Fließrichtung (F) des Mediums (101) einen zweiten Winkel (β) zwischen 0° und 80°, vorzugsweise zwischen 0° und 60°, einschließt, umfassend folgende Schritte:
- Aussenden eines Sendesignals (105) mit einer Mehrzahl von Frequenzrampen (501-504),
- Empfangen eines Empfangssignals pro Frequenzrampe (501-504) des Sendesignals (105),
- Abspeichern der Empfangssignale,
- Durchführen einer ersten Spektralanalyse der Empfangssignale,
- Durchführen einer zweiten Spektralanalyse mehrerer Empfangssignale oder Ausgangssignale der ersten Spektralanalyse,
- Bestimmen einer Fließgeschwindigkeit (v) auf Basis der Phasenänderung anhand der Ausgangssignale der zweiten Spektralanalyse in einem Abstandsbereich (II), ein Bereich von einem minimalen Abstand bis zu einem maximalen Abstand der sich aufgrund eines Abstandes der Oberfläche des Mediums (101) von dem Radarmessgerät (100) in Hauptabstrahlrichtung (H1) und dem ersten Winkel und zweiten Winkel ergibt, wobei die Fließgeschwindigkeit (v) aufgrund einer durchschnittlichen Phasenänderung in dem Abstandsbereich (II) ermittelt, ein Pegel des Mediums (101) in dem Gerinne (104) ermittelt und der Abstandsbereich (II) auf Basis des ermittelten Pegels angepasst wird.

2. Verfahren gemäß einem der vorhergehenden Ansprüche,
**dadurch gekennzeichne**t, dass die Spektralanalyse eine schnelle Fouriertransformation (FFT) ist.

3. Verfahren gemäß einem der vorhergehenden Ansprüche,
**dadurch gekennzeichne**t, dass ein Sendesignal (102) mit wenigstens 25, vorzugsweise wenigstens 50, weiter vorzugsweise einigen Hundert Frequenzrampen ausgesendet wird.

4. Verfahren gemäß einem der vorhergehenden Ansprüche,
**dadurch gekennzeichnet, dass** das Sendesignal (102) eine Anzahl von 2ⁿ Frequenzrampen aufweist.

5. Verfahren gemäß Anspruch 4,
**dadurch gekennzeichne**t, dass das Sendesignal (102) 128, 256 oder 512 Frequenzrampen enthält.

6. Verfahren gemäß einem der vorhergehenden Ansprüche,
**dadurch gekennzeichnet, dass** eine Frequenzrampe eine Dauer zwischen 1 µs und 1000 µs, vorzugsweise zwischen 50 µs und 300 µs, insbesondere 100 µs oder 200 µs aufweist.

7. Verfahren gemäß einem der vorhergehenden Ansprüche,
**dadurch gekennzeichnet, dass** eine Startfrequenz f1 und/oder eine Steigung und/oder eine Schrittweite der Frequenzrampen variiert.

8. Verfahren gemäß einem der vorhergehenden Ansprüche,
**dadurch gekennzeichnet, dass** der erste Winkel (α) durch einen Lagesensor bestimmt wird.

## Claims

1. A method for measuring the flow velocity (v) of a medium (101) in an open channel (104) with a radar measuring device (100),
wherein the radar measuring device (100) is arranged and oriented in such a way that a primary emission direction (H1) of the radar measuring device (100) forms with a direction of a surface normal of the medium (101) a first angle (α) between 20° and 80°, preferably between 30° and 60°, and with a flow direction (F) of the medium (101) a second angle (β) between 0° and 80°, preferably between 0° and 60°, comprising the following steps:
- Emitting a transmission signal (105) with a plurality of frequency ramps (501-504),
- Receiving a reception signal per frequency ramp (501-504) of the transmission signal (105),
- Saving the reception signals,
- Performing a first spectral analysis of the reception signals,
- Performing a second spectral analysis of several reception signals or output signals of the first spectral analysis,
- Determining a flow velocity (v) based on the phase change using the output signals of the second spectral analysis in a distance range (II), i.e. a range from a minimum distance up to a maximum distance resulting on account of a distance of the surface of the medium (101) from the radar measuring device (100) in the main emission direction (H1) and the first angle and second angle, wherein the flow velocity (v) is determined on account of an average phase change in the distance range (II), a level of the medium (101) in the channel (104) is determined, and the distance range (II) is adjusted based on the determined level.

2. The method according to claim 1,
**characterised in that**
the spectral analysis is a fast Fourier transformation (FFT).

3. The method according to one of the preceding claims,
**characterised in that**
a transmission signal (102) with at least 25, preferably at least 50, more preferably a few hundred frequency ramps is emitted.

4. The method according to one of the preceding claims,
**characterised in that**
the transmission signal (102) has a number of 2ⁿ frequency ramps.

5. The method according to claim 4,
**characterised in that**
the transmission signal (102) contains 128, 256 or 512 frequency ramps.

6. The method according to one of the preceding claims,
**characterised in that**
a frequency ramp has a duration between 1 µs and 1000 µs, preferably between 50 µs and 300 µs, in particular 100 µs or 200 µs.

7. The method according to one of the preceding claims,
**characterised in that**
a start frequency f1 and/or a slope and/or an increment of the frequency ramps varies.

8. The method according to one of the preceding claims,
**characterised in that**
the first angle (α) is determined by a position sensor.

## Revendications

1. Procédé de mesure de la vitesse d'écoulement (v) d'un milieu (101) dans un canal ouvert (104) au moyen d'un dispositif de mesure radar (100),
dans lequel le dispositif de mesure radar (100) est agencé et aligné de telle sorte qu'une direction d'émission principale (H1) du dispositif de mesure radar (100) définit un premier angle (α) compris entre 20° et 80°, de préférence entre 30° et 60°, avec une direction d'une normale de surface du milieu (101), et un deuxième angle (β) compris entre 0° et 80°, de préférence entre 0° et 60°, avec une direction d'écoulement (F) du milieu (101), comprenant les étapes suivantes consistant à:
- émettre un signal d'émission (105) avec une pluralité de rampes de fréquence (501-504),
- recevoir un signal de réception par rampe de fréquence (501-504) du signal d'émission (105),
- stocker les signaux de réception,
- effectuer une première analyse spectrale des signaux de réception,
- effectuer une deuxième analyse spectrale de plusieurs signaux de réception ou signaux de sortie de la première analyse spectrale,
- déterminer une vitesse d'écoulement (v) sur la base du changement de phase à l'aide des signaux de sortie de la deuxième analyse spectrale dans une plage de distance (II), une plage allant d'une distance minimale à une distance maximale qui résulte d'une distance de la surface du milieu (101) par rapport au dispositif de mesure radar (100) dans la direction d'émission principale (H1) et des premier angle et deuxième angle, dans lequel la vitesse d'écoulement (v) est déterminée en raison d'un changement de phase moyen dans la plage de distance (II), un niveau du milieu (101) dans le canal (104) est déterminé et la plage de distance (II) est adaptée sur la base du niveau déterminé.

2. Procédé selon la revendication précédente, **caractérisé par le fait que** l'analyse spectrale est une transformée de Fourier rapide (FFT).

3. Procédé selon l'une quelconque des revendications précédentes, **caractérisé par le fait qu'**on émet un signal d'émission (102) avec au moins 25, de préférence au moins 50, en outre de préférence quelques centaines de rampes de fréquence.

4. Procédé selon l'une quelconque des revendications précédentes, **caractérisé par le fait que** le signal d'émission (102) présente un nombre de 2ⁿ rampes de fréquence.

5. Procédé selon la revendication 4, **caractérisé par le fait que** le signal d'émission (102) contient 128, 256 ou 512 rampes de fréquence.

6. Procédé selon l'une quelconque des revendications précédentes, **caractérisé par le fait qu'**une rampe de fréquence présente une durée comprise entre 1 µs et 1000 µs, de préférence entre 50 µs et 300 µs, en particulier de 100 µs ou de 200 µs.

7. Procédé selon l'une quelconque des revendications précédentes, **caractérisé par le fait qu'**une fréquence de départ f1 et/ou une pente et/ou un pas des rampes de fréquence varie.

8. Procédé selon l'une quelconque des revendications précédentes, **caractérisé par le fait que** le premier angle (α) est déterminé par un capteur de position.
